# EUROPEAN PATENT APPLICATION

(11) **EP 4 176 968 A1**
(43) Date of publication of application: **10.05.2023**
(21) Application number: 22170720.1
(22) Date of filing: 29.04.2022
(51) Int. Cl.: B01J 23/745, B01J 37/03, B01J 35/00, C02F 1/72, C02F 1/32

(54) **CATALYST COMPOSITION FOR DEGRADATION OF ORGANIC COMPOUND USING IRON OXIDE, PREPARATION METHOD THEREOF, AND METHOD FOR DEGRADATION OF ORGANIC COMPOUND USING THE SAME**

(30) Priority: 08.11.2021 KR 20210152234
(71) Applicant: Korea Institute of Science and Technology, Seoul 02792 (KR)
(72) Inventor: KIM, Sang Hoon, 02792 SEOUL (KR); MOON, Gun-Hee, 02792 SEOUL (KR); KIM, Jongsik, 02792 SEOUL (KR)
(74) Representative: ZBM Patents - Zea, Barlocci & Markvardsen

(57) **Abstract**

The present disclosure relates to a catalyst that removes an organic compound by using a metal oxide catalyst and a preparation method thereof and a method for degradation of an organic compound using the same. Particularly, the present disclosure relates to a copper-iron oxide(Cu-Fe₂O₃) catalyst composition that is prepared by following steps of: adding a mixed solution of an iron(Fe) precursor and a copper(Cu) precursor to a precipitator solution(S1); obtaining precipitates by heating a solution prepared in the step S1 (S2); obtaining a metal oxalate by filtering the precipitates obtained in the step S2 (S3); drying the metal oxalate obtained in the step S3 (S4); and obtaining a copper-iron oxide catalyst by calcinating the metal oxalate subjected to the step S4 (S5) and a method for removal of an organic compound using the same.

## Description

This application claims priority and benefit of Korean Patent Application No. 10-2021-0152234 filed on November 8, 2021, in the Korean Intellectual Property Office, the entire disclosure of which is hereby incorporated by reference herein in its entirety.

### Technical field

The present disclosure relates to a catalyst composition for degradation of an organic compound using iron oxide, a preparation method thereof and a method for degradation of an organic compound using the same. More particularly, the present disclosure relates to a catalyst that removes an organic compound by using a metal oxide catalyst and a preparation method thereof and a method for degradation of an organic compound using the same.

### Background Art

Volatile organic compounds(VOCs)are easily vaporized at room temperature under atmospheric pressure due to a high vapor pressure, thus falling into one of main air pollutants. VOCs such as alcohols, alkenes and aromatic compounds either directly appear toxicity or indirectly affect the human body and the environment adversely. Accordingly, advanced countries either set stricter environment standards or establish new environmental policies and regulations to decline the air pollution, and further develop various techniques for cleaning air to reduce the VOCs.

Isopropyl alcohol(IPA), that is, one kind of VOCs, is widely used as a solvent and a cleaning agent in the field of electronics industry. Particularly, the IPA is mostly used for cleaning electronics including disk heads, laser lenses, optical disc drives and liquid crystal displays, appearing symptoms such as headache, depression, vomiting, and the like when workers are exposed thereto.

Wet scrubber and thermal oxidation are well known as common methods for removal of IPA. However, the absorption method simply transfers pollutants from the gaseous phase to the liquid phase to cause a secondary water(aquatic) pollution, the thermal oxidation requiring high temperature of 750°C or more to involve high fuel costs and to use special heat-resistant materials. Besides, studies for a catalysis or photocatalysis process, a low temperature plasma process and a plasma-catalyst hybrid system are ongoing.

Catalytic oxidation allows oxidation of VOCs at relatively low temperatures, treating harmful gases with lower running costs compared to thermal oxidation. Catalysts for degradation of VOCs can be categorized as noble metal catalysts and metal oxide catalysts. The noble metal catalyst has a high catalytic activity but is high priced, the catalytic activity thereof prominently reduced by poisoning when including chloride, sulfur, water and the like. Thus, recently, extensively used are low-priced metal oxide catalysts with rather inferior activities, but not requiring any special attention to control of the VOCs.

Generally, determination of the reaction rate of a hydrocarbon-oxidation reaction using metal oxide catalysts closely relates to the redox mechanism of the metal oxide catalysts that oxidize hydrocarbon. It is known that copper oxide among the metal oxide catalysts has high activity and selectivity for degradation of VOCs. According to Wang et al., the copper oxide has a superior degradation performance in organic compounds. However, it is supposed to maintain a reaction temperature to 300°C to 500°C and to pre-heat inflow gases. Further, the organic compounds are partially oxidized promising to produce organic compounds with different morphologies such as ethylacetate, ethanol, and the like and harmful degradation byproducts.

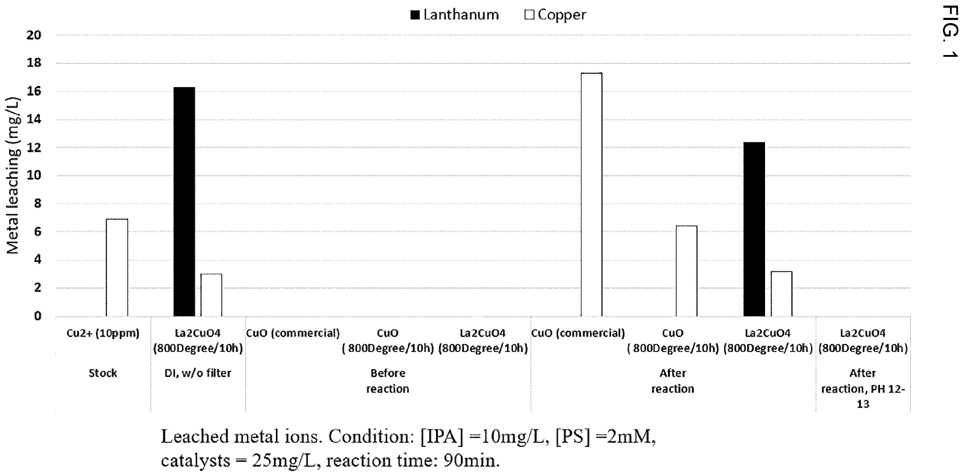

Further, CuO and La₂CuO₄ widely used as metal oxide catalysts have low durability resulting in leaching metals from the metal oxide catalysts (See FIG. 1).

### Prior art Documents:

### Patent Documents:

- Patent Document 0001) Korean Patent Registration No. 10-2112654
- Patent Document 0002) Japanese Patent Application Publication No. 2011-212584

### Non-Patent Documents:

- Non-Patent Document 0001) Plasma-assisted Catalysis for the Abatement of Isopropyl Alcohol over Metal Oxides (Jin Oh Jo, Sang Baek Lee, Dong Lyong Jang, Jong-Ho Park, and Young Sun Mok; CLEAN TECHNOLOGY, Vol. 20, No. 4, December 2014, pp. 375-382)
- Non-Patent Document 0002) Oxidation of Isopropyl Alcohol in Air by a Catalytic Plasma Reactor System (Jin Oh Jo and Young Sun Mok; Appl. Chem. Eng., Vol. 25, No. 5, October 2014, 531-537)

### Summary of the invention

The present disclosure aims to provide a copper-iron oxide(Cu-Fe₂O₃) catalyst for degradation of an organic compound with enhanced durability to solve a problem over metal leaching in the prior catalyst for degradation of an organic compound.

Meanwhile, technical aims to be achieved by the present disclosure are not limited to the aforementioned aim, and other not-mentioned technical aims may be clearly understood by ordinary skilled person in the art to which the present disclosure pertains from the description below.

According to a first aspect of the present disclosure described herein, a copper-iron oxide(Cu-Fe₂O₃) catalyst composition may be prepared by following steps of:
adding a mixed solution of an iron(Fe) precursor and a copper(Cu) precursor to a precipitator solution(S1);
obtaining precipitates by heating a solution prepared in the step S1 (S2);
obtaining metal oxalate by filtering the precipitates obtained in the step S2 (S3);
drying the metal oxalate obtained in the step S3 (S4); and
obtaining a copper-iron oxide catalyst by calcinating the metal oxalate subjected to the step S4 (S5).

According to another aspect of the present disclosure described herein, the precipitator solution may be a solution of oxalic acid dehydrate(C₂H₂O₄·2H₂O).

According to another aspect of the present disclosure described herein, a molar ratio of an iron ion(Fe₂⁺) to a copper ion(Cu₂⁺)(Fe₂⁺: Cu₂⁺) in the mixed solution of the iron(Fe) precursor and the copper(Cu) precursor of the step S1 may be 100 : 1.69 to 20.

According to another aspect of the present disclosure described herein, a calcination temperature in the step S5 in which the metal oxalate is calcinated may range from 300°C or more and 400°C or less.

According to another aspect of the present disclosure described herein, the mixed solution of the Fe precursor and the Cu precursor may be a mixed solution of iron(II) sulfate heptahydrate(FeSO₄.7H₂O) and copper sulfate pentahydrate(CuSO₄·5H₂O).

According to a second aspect of the present disclosure described herein, a preparation method of a copper-iron oxide catalyst composition may include following steps of: adding a mixed solution of an iron(Fe) precursor and a copper(Cu) precursor to a precipitator solution(S1);
obtaining precipitates by heating a solution prepared in the step S1 (S2);
obtaining metal oxalate by filtering the precipitates obtained in the step S2 (S3);
drying the metal oxalate obtained in the step S3 (S4); and
obtaining a copper-iron oxide catalyst by calcinating the metal oxalate subjected to the step S4 (S5).

According to another aspect of the present disclosure described herein, the precipitator solution may a solution of oxalic acid dehydrate(C₂H₂O₄·2H₂O).

According to another aspect of the present disclosure described herein, a molar ratio of an iron ion(Fe₂⁺) to a copper ion(Cu₂⁺)(Fe₂⁺: Cu₂⁺) in the mixed solution of the iron(Fe) precursor and the copper(Cu) precursor of the step S1 may be 100 : 1.69 to 20.

According to another aspect of the present disclosure described herein, the mixed solution of the iron(Fe) precursor and the copper(Cu) precursor may be a mixed solution of iron(II) sulfate heptahydrate(FeSO₄.7H₂O) and copper sulfate pentahydrate(CuSO₄·5H₂O).

According to a third aspect of the present disclosure described herein, a method of degradation of an organic compound using a copper-iron oxide catalyst may include following steps of:
sonicating a solution including a copper-iron oxide catalyst composition prepared according to claim 1(S1);
adding an organic compound to the sonicated solution in the step S1, followed by stirring (S2);
adding an oxidant to the solution of the step S2 (S3); and
irradiating an ultraviolet(UV) ray to the solution prepared in the step S3 (S4).

According to another aspect of the present disclosure described herein, the oxidant may be sodium persulfate(PS).

According to another aspect of the present disclosure described herein, the organic compound may be at least anyone selected from a group consisting of isopropyl alcohol(IPA), bisphenol-A(BPA), acetone, 4-chlorophenol(CP), phenol and 4-noylphenol(4-NP).

### Advantageous Effect:

It is capable of removing an organic compound including IPA by using a copper-iron oxide catalyst in accordance with the present disclosure. Further, the copper-iron oxide catalyst in accordance with the present disclosure has 1) abundant porosity and good magnetism, 2) a high activation performance in sodium persulfate(PS, Na₂S2O₈) for degradation of an organic compound, 3) superior stability at low pH, and 4) an effect of restricting leaching of copper(Cu) to under 0.1 mg/L.

Meanwhile, advantageous effects to be obtained by the present disclosure are not limited to the aforementioned effects, and other not-mentioned advantageous effects may be clearly understood by ordinary skilled person in the art to which the present disclosure pertains from the description below.

### Brief description of the drawings

The accompanying drawings in the specification illustrate an embodiment of the present disclosure. The technical essence of the present disclosure will be more clearly understood from the following detailed description taken in conjunction with the accompanying drawings. Therefore, the present disclosure will not be interpreted to be limited to the drawings in which:
FIG. 1 is a graph that shows metal leaching levels with respect to metal oxide catalysts of CuO and La₂CuO₄ widely used as prior metal oxide catalysts;
FIG. 2A is a flowchart that shows procedures of a preparation method of a copper-iron oxide catalyst for degradation of an organic compound according to one embodiment of the present disclosure;
FIG. 2B is graphs that show total organic carbon (TOC) removal rates and metal leaching levels when IPA was removed by using copper-iron oxide catalysts prepared according to one embodiment of the present disclosure;
FIG. 3A is a graph that shows a comparison of TOC removal rates of copper-iron oxide catalysts according to one embodiment of the present disclosure and other catalysts;
FIG. 3B is graphs that show a comparison of metal leaching levels of metal oxide catalysts according to one embodiment of the present disclosure through an experiment;
FIG. 4 is SEM-EDS analysis image and graph that show morphology of metal oxides according to one embodiment of the present disclosure;
FIG. 5 is graphs and a table that show BET specific surface areas of metal oxides according to one embodiment of the present disclosure;
FIG. 6 is a picture that shows magnetic properties of metal oxide catalysts according to one embodiment of the present disclosure;
FIG. 7 is SEM images that show a comparison of copper-iron oxide catalysts according to one embodiment of the present disclosure and an iron oxide catalyst;
FIGS. 8A to 8F are images for morphologies of copper-iron oxide catalysts according to one embodiment of the present disclosure;
FIG. 9 is a graph that shows Raman spectrum results of copper-iron oxide catalysts according to one embodiment of the present disclosure;
FIGS. 10A, 10B, 10C and 10D are graphs that show XRD analysis results of copper-iron oxide catalysts according to one embodiment of the present disclosure;
FIG. 11 is a graph that shows a comparison of XRD analysis results of copper-iron oxide catalysts and copper oxides;
FIG. 12A is a graph that shows TOC removal rates depending on different ratios of copper when preparing copper-iron oxide catalysts according to one embodiment of the present disclosure, and FIG. 12B is a graph that shows metal leaching levels of the copper-iron oxide catalysts of FIG. 12A;
FIG. 13 is a flowchart that shows experiment procedures of a removal method of IPA by using a copper-iron oxide catalyst according to one embodiment of the present disclosure;
FIG. 14A is a graph that shows experiment results for effects on TOC removal rates depending on different types of oxidants used in FIG. 13, and FIG. 14B is a graph that shows experiment results for the effect of a chloride ion on TOC removal rates when using sodium persulfate(PS, Na₂S₂O₃) as an oxidant in FIG. 13;
FIGS. 15A to 15F are graphs that show experiment results for effects on TOC removal rates depending on different conditions for each procedure in the removal method of IPA by copper-iron oxide catalysts according to one embodiment of the present disclosure;
FIG. 16A is a graph that shows a comparison of degradation effects of copper-iron oxide catalysts according to one embodiment of the present disclosure on various kinds of organic matters(BPA, IPA, acetone), and FIG. 16B is a graph that shows a comparison of degradation effects of copper-iron oxide catalysts according to one embodiment of the present disclosure on various kinds of organic matters(4-CP, phenol, 4-NP);
FIGS. 17A to 17C are graphs that shows experiment results for removal of IPA(100ppm) by copper-iron oxide catalysts according to one embodiment of the present disclosure;
FIGS. 18A to 18B are graphs that shows experiment results for removal of IPA(100ppm) by copper-iron oxide catalysts according to one embodiment of the present disclosure;
FIG. 19 is a picture that shows a comparison of copper-iron oxide catalysts prepared with different copper concentrations when preparing copper-iron oxide catalysts according to one embodiment of the present disclosure;
FIG. 20A is a flowchart that shows experiment procedures of metal leaching, and FIG. 20B is a table that shows use conditions of inductively coupled plasma-mass spectrometry (ICP-MS);
FIGS. 21A to 21B are graphs that show experiment results for specific surface areas of copper-iron oxide catalysts according to one embodiment of the present invention;
FIG. 22 is a table that shows an experiment result for specific surface areas, mean pore sizes and pore volumes depending on different copper concentrations of copper-iron oxide catalysts according to one embodiment of the present disclosure;
FIGS. 23A to 23B are graphs that show experiment results for total organic carbon(TOC) removal rates and metal leaching levels depending on different copper concentrations with respect to a preparation method of copper-iron oxide catalysts according to one embodiment of the present disclosure;
FIGS. 24A and 24B are graphs that show (a) copper(Cu) leaching levels and (b) experiment results for differences in degradation rates depending on different heat-treatment temperatures of copper-iron oxide catalysts according to one embodiment of the present disclosure;
FIG. 25 is a graph that shows a comparison of IPA degradation rates of copper-iron oxide catalysts according to one embodiment of the present disclosure and heat-treated commercial copper oxide;
FIG. 26 is a graph that shows a comparison of IPA removal performances of Cu oxide, Cu-iron oxide, Mn-iron oxide and Ni-iron oxide; and
FIG. 27 is a picture of an experimental apparatus for IPA degradation by using copper-iron oxide according to one embodiment of the present disclosure.

The significance of features and advantages of the present disclosure will be better understood with reference to the accompanying drawings. However, it should be understood that those drawings are devised for purposes of illustration only and do not define the limitations of the present disclosure.

### Detailed description of the invention

Hereinafter, embodiments of the present disclosure will be described in detail with reference to the accompanying drawings so that those skilled in the art to which the present disclosure pertains may easily implement the present disclosure. However, since the description of the present disclosure is merely embodiments for structural or functional description, the scope of rights of the present disclosure should not be construed as being limited by the embodiments described in the text. That is, since the embodiments may be variously changed and may have various forms, it should be understood that the scope of rights of the present disclosure includes equivalents capable of realizing the technical idea. Further, since the object or effect presented in the present disclosure does not mean that a specific embodiment should include all of them or only such an effect, it should not be understood that the scope of rights of the present disclosure is limited thereby.

The meaning of the terms described in the present disclosure should be understood as follows.

Terms such as "first", "second", etc. are for distinguishing one element from other elements, and the scope of rights should not be limited by these terms. For example, a first element may be termed a second element, and similarly, the second element may also be termed the first element. When a component is referred to as being "connected" to other components, it may be directly connected to the other components, but it should be understood that another component may exist in the middle thereof. On the other hand, when it is mentioned that a certain component is "directly connected" to other component, it should be understood that another component does not exist in the middle thereof. Meanwhile, other expressions describing the relationship between components, that is, "between" and "directly between" or "neighboring to" and "directly adjacent to", etc., should also be interpreted similarly.

The singular expression should be understood as including the plural expression unless the context clearly dictates otherwise, it is intended to designate that a term such as "comprises", or "have", refers to the specified feature, number, step, operation, component, part, or a combination thereof exists, and it should be understood that it does not preclude the possibility of the existence or addition of one or more other features or numbers, steps, operations, components, parts, or combinations thereof in advance.

All terms used herein have the same meaning as commonly understood by those skilled in the art to which the present disclosure pertains, unless otherwise defined. Terms defined in generally used dictionaries should be interpreted as having the meaning consistent with that in the context of the related art and may not be interpreted as having an ideal or excessively formal meaning unless explicitly defined in the present disclosure.

FIG. 1 is a graph that shows metal leaching levels with respect to metal oxide catalysts of CuO and La₂CuO₄ widely used as prior metal oxide catalysts. The present disclosure aims to increase a degradation performance of metal oxide catalysts that remove IPA as well as a durability.

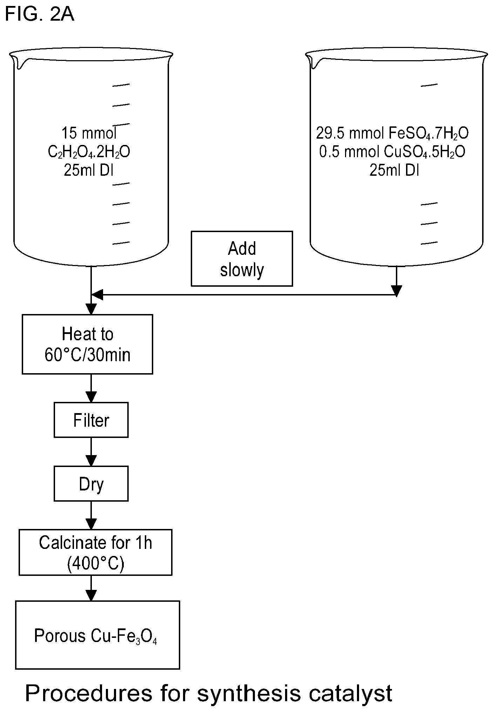

FIG. 2A is a flowchart that shows procedures of a preparation method of a copper-iron oxide catalyst for degradation of an organic compound according to the present disclosure. In step S1, to a precipitator solution, added is a mixed solution of an iron(Fe) precursor and a copper(Cu) precursor. Then, in step S2, obtained are precipitates by heating a solution prepared in the step S1. In step S3, obtained is metal oxalate by filtering the precipitates obtained in the step S2. In step S4, dried is the metal oxalate obtained in the step S3. Then, in step S5, calcinated is the resulting metal oxalate to prepare a copper-iron oxide catalyst.

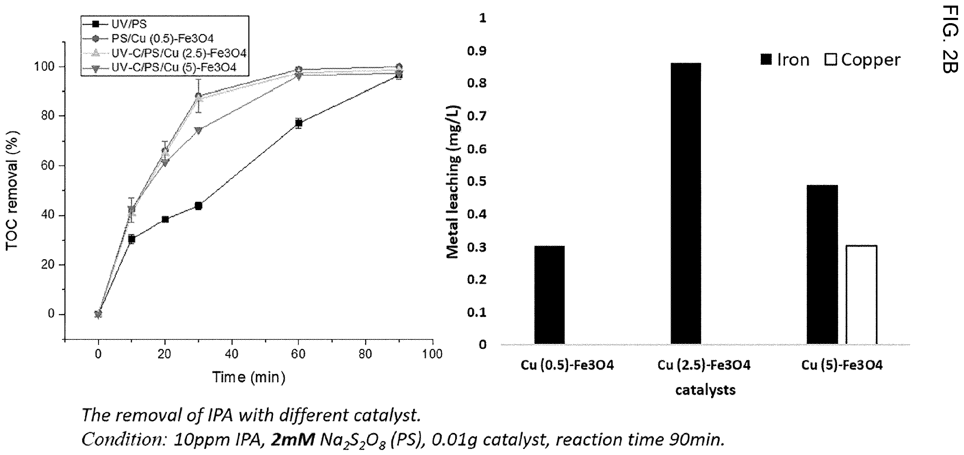

FIG. 2B are graphs that show total organic carbon(TOC) removal rates and metal leaching levels when IPA was removed by using copper-iron oxide catalysts prepared according to one embodiment of the present disclosure. The catalyst obtained according to the aforementioned method has the following advantages: 1) abundant porosity and good magnetism; 2) a high activation performance in sodium persulfate(PS, Na₂S2O₈) for degradation of an organic compound; 3) a superior stability at a low pH; and 4) restriction of leaching of Cu to under 0.1mg/L. In FIG. 2B, 1) Cu(0.5)-Fe₃O₄, 2) Cu(2.5)-Fe₃O₄ and 3) Cu(5)-Fe₃O₄ mean additions of: 29.5 mmol of FeSO₄·7H2O and 0.5 mmol of CuSO₄·5H₂O; 27.5 mmol of FeSO₄·7H2O and 2.5 mmol of CuSO₄·5H₂O; and 25 mmol of FeSO₄·7H2O and 5 mmol of CuSO₄·5H₂O, to the step S1 of the preparation method in FIG. 2A, respectively.

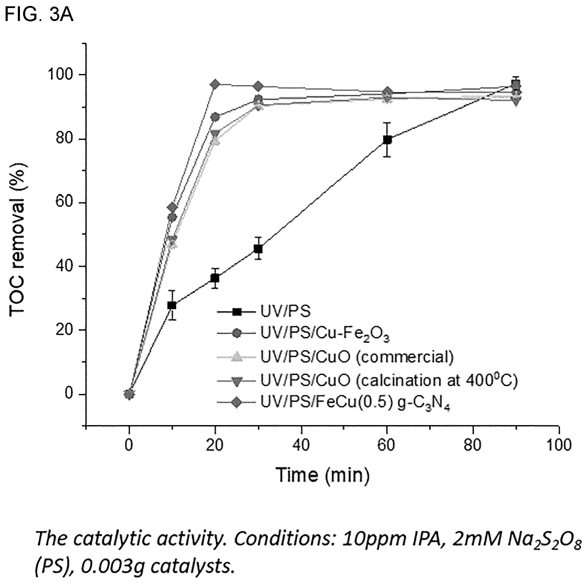

FIG. 3A is a graph that shows a comparison of TOC removal rates of copper-iron oxide catalysts according to one embodiment of the present disclosure and other catalysts.

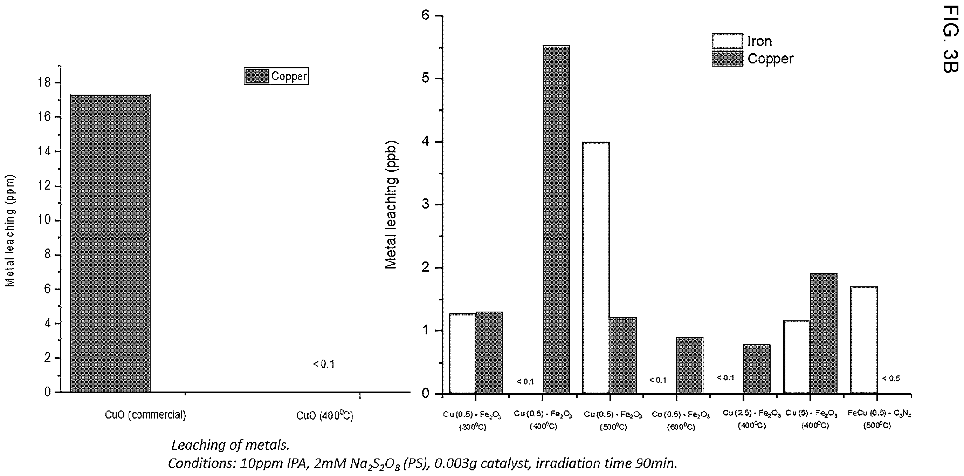

FIG. 3B is graphs that show a comparison of metal leaching levels of metal oxide catalysts according to one embodiment of the present disclosure through an experiment.

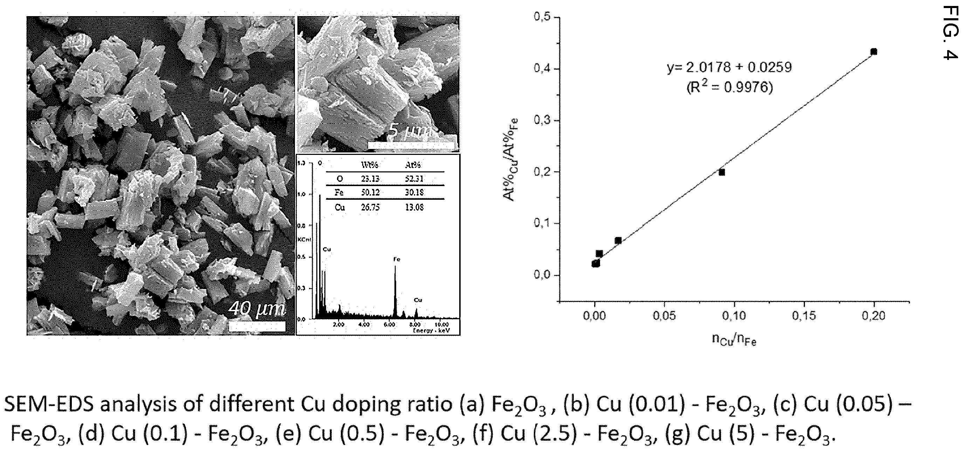

FIG. 4 is SEM-EDS analysis image of and graph that show morphology of metal oxides according to one embodiment of the present disclosure. According to the SEM-EDS analysis, it is found that a metal oxide catalyst of Cu-Fe₂O₃ in accordance with the present disclosure has abundant cracks and is composed of rectangular shaped nanoparticles, and Fe, Cu and O are coexisting in the porous Cu-Fe₂O₃.

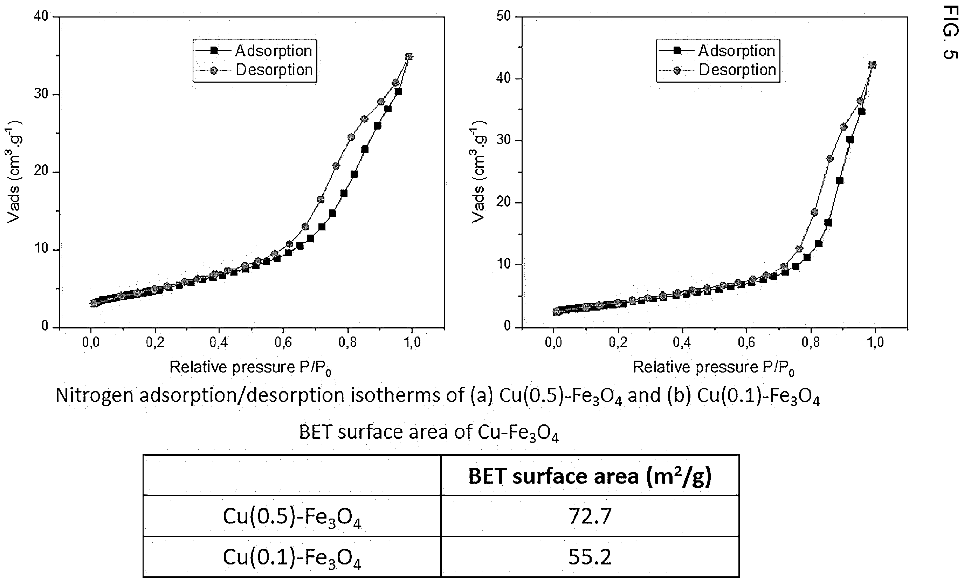

FIG. 5 is graphs and a table that show BET specific surface areas of metal oxides according to one embodiment of the present disclosure.

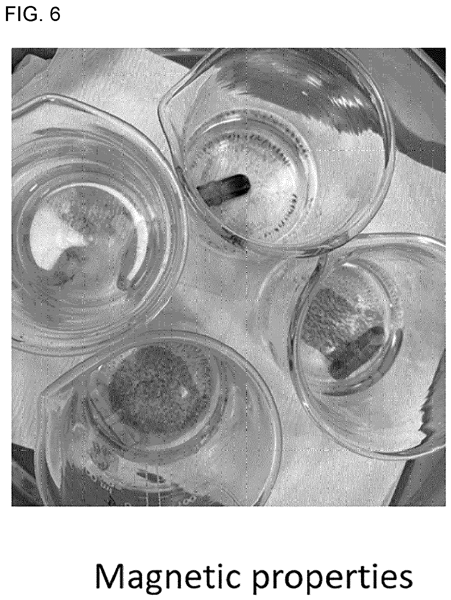

FIG. 6 is a picture that shows magnetic properties of metal oxide catalysts according to one embodiment of the present disclosure.

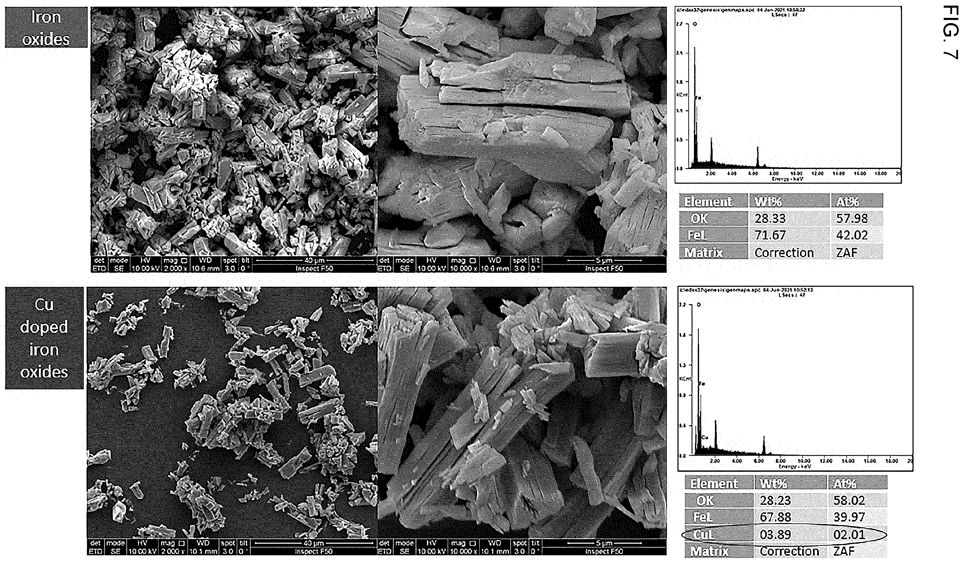

FIG. 7 is SEM images that show a comparison of copper-iron oxide catalysts according to one embodiment of the present disclosure and an iron oxide catalyst. It is found that Fe, Cu and O are coexist in the copper-iron oxide catalysts in accordance with one embodiment of the present disclosure.

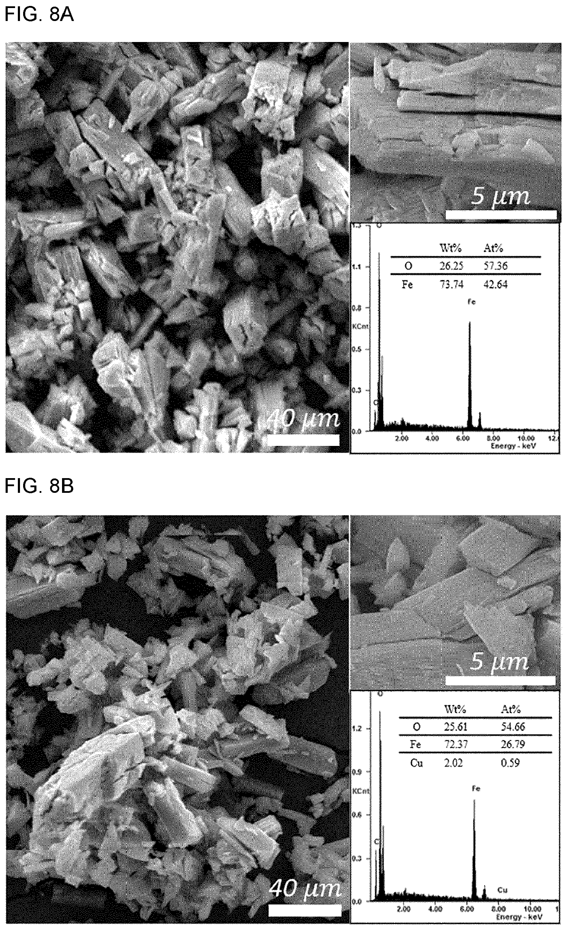

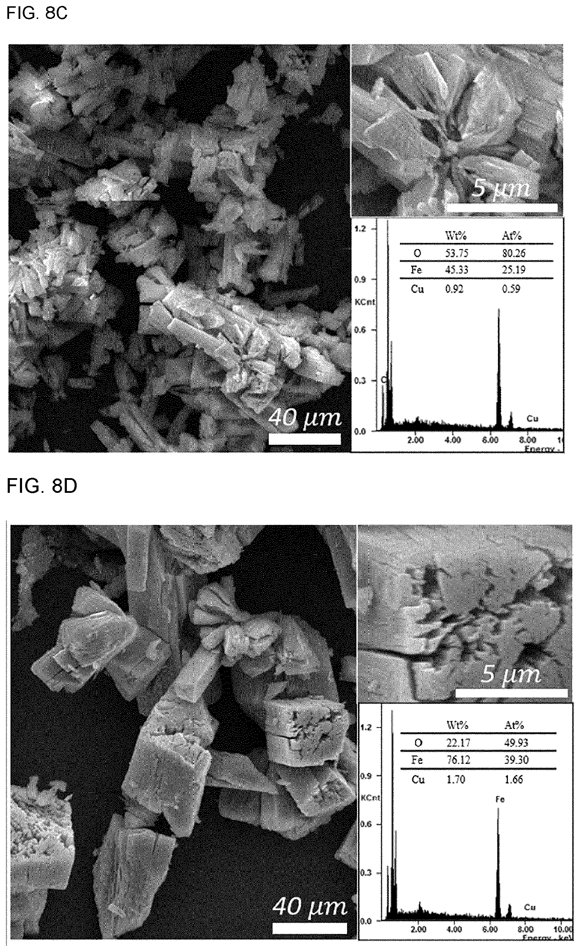

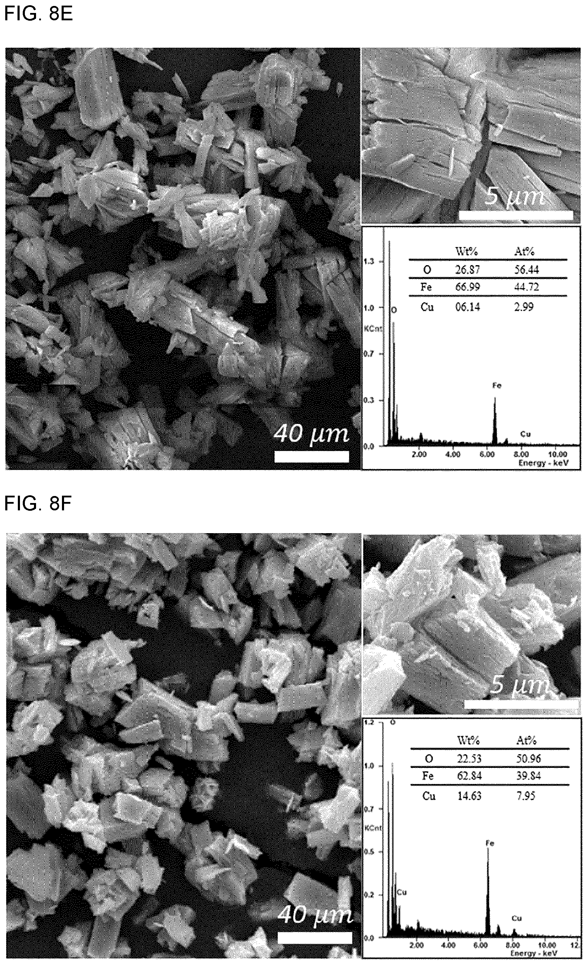

FIGS. 8A to 8F are images for morphologies of copper-iron oxide catalysts according to one embodiment of the present disclosure.

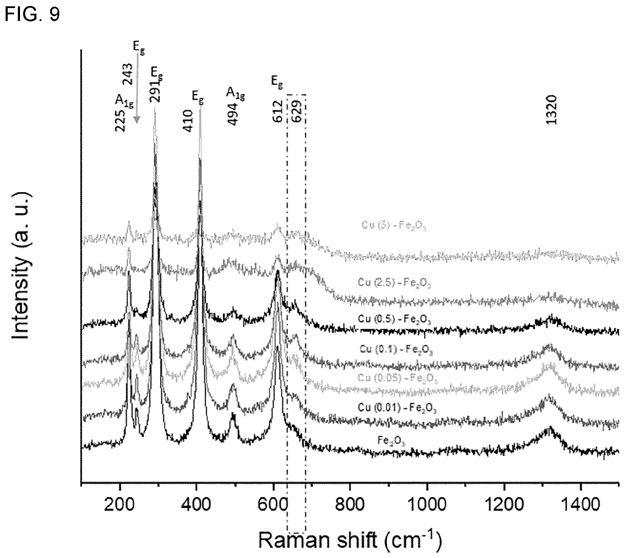

FIG. 9 is a graph that shows Raman spectrum results of copper-iron oxide catalysts according to one embodiment of the present disclosure. The Raman spectroscopy is carried out at a wavelength of 532nm, showing a great fluorescence peak. The copper-iron oxide catalysts according to the present disclosure was measured at a wavelength of 785nm.

Herein, a sample is α-Fe₂O₃, and after increasing a Cu concentration, observed is a prominent decrease in the peak intensity of α-Fe₂O₃. A Cu²⁺ ion is incorporated into the α-Fe₂O₃.

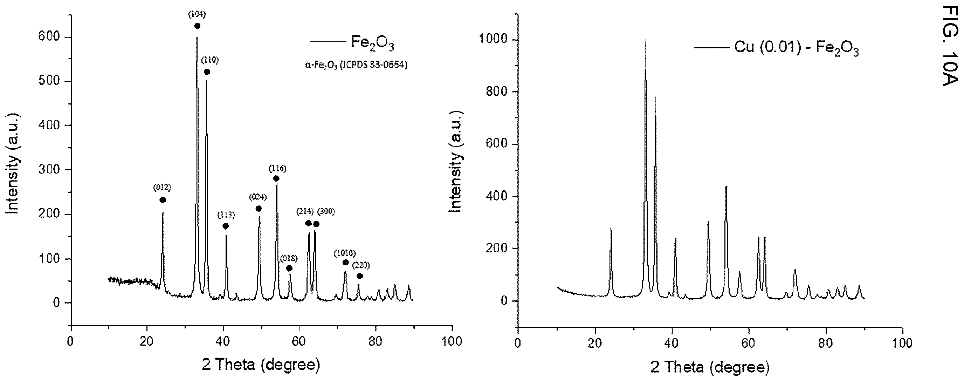

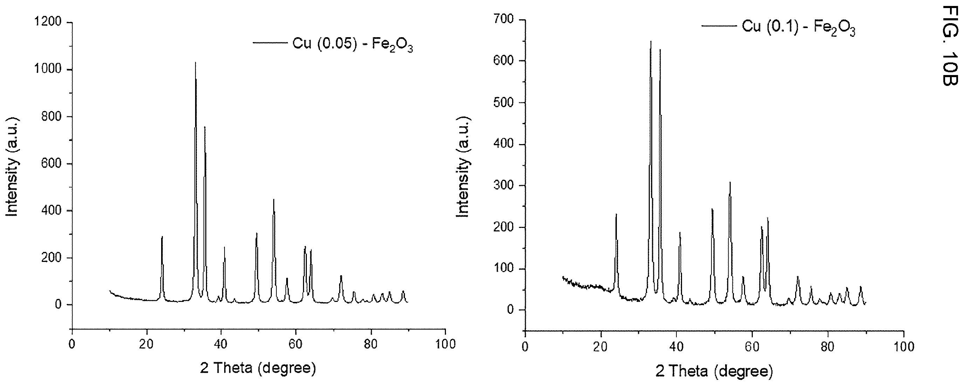

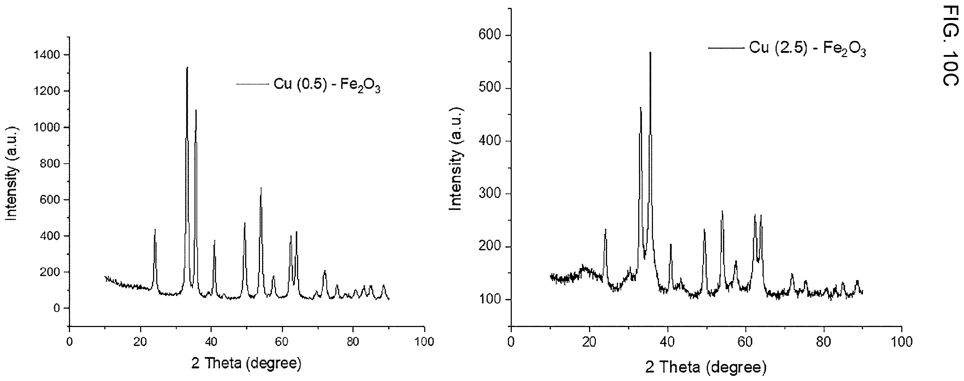

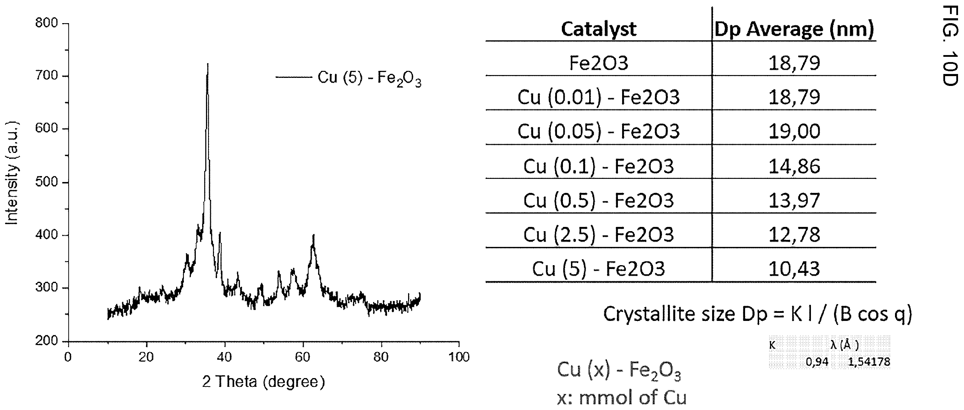

FIGS. 10A, 10B, 10C and 10D are graphs that show XRD analysis results of copper-iron oxide catalysts according to one embodiment of the present disclosure. Only observed are peaks of Fe₂O₃ 012, 104, 110, 113, 024, 116 and 018 in terms of Fe₂O₃(JCPDS 33-0664). According to the XRD results, there is no existence of a crystalline phase of Cu on a sample, Cu(x)-Fe₂O₃ (wherein x is 0.01, 0.05, 0.1, 0.5 and 2.5). Lower Cu doping ratios (x is 0.01, 0.05, 0.1, 05) hardly affect crystallinity of Fe₂O₃. It is clearly found that when increasing a Cu concentration (x is 2.5 and 5), the intensity of Fe2O3 decreases and the full width at half maximum increases to decrease a particle size.

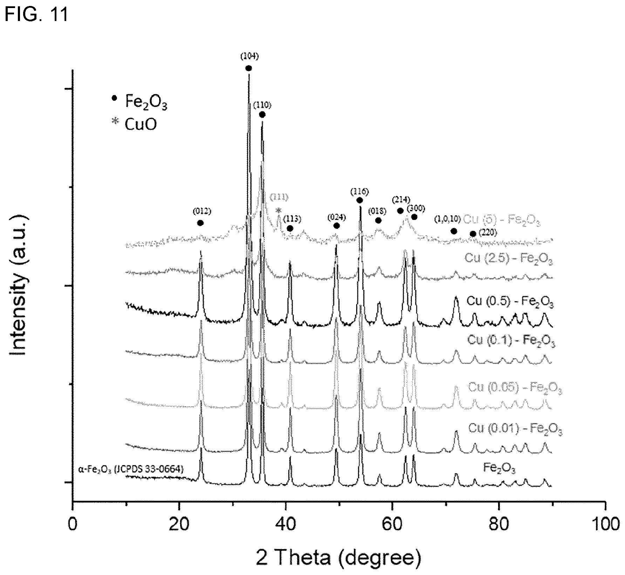

FIG. 11 is a graph that shows a comparison of XRD analysis results of copper-iron oxide catalysts and copper oxides.

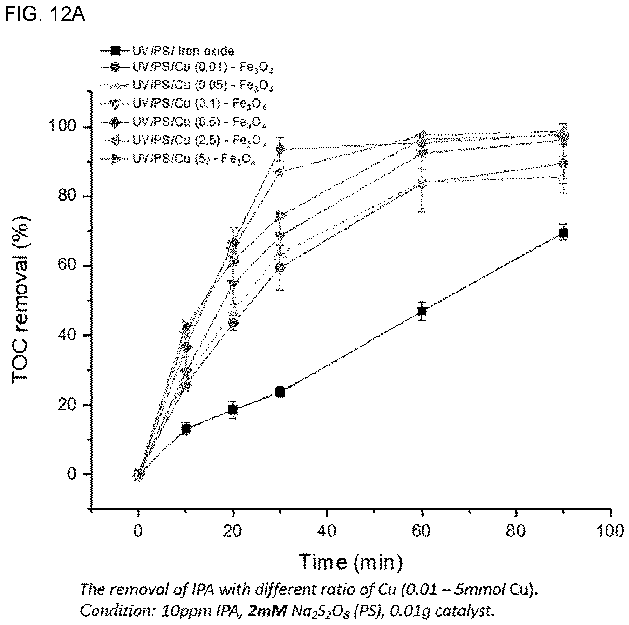

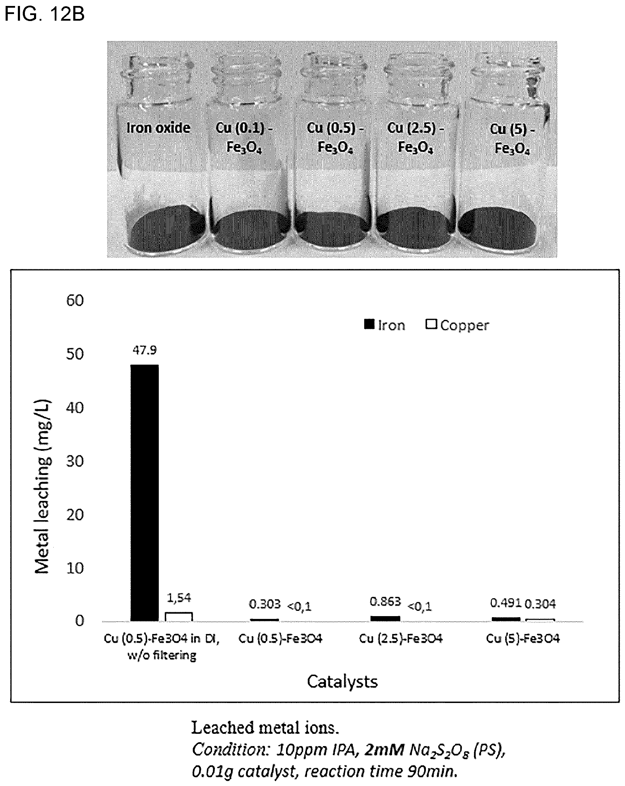

FIG. 12A is a graph that shows TOC removal rates depending on different ratios of copper when preparing copper-iron oxide catalysts according to one embodiment of the present disclosure, and FIG. 12B is a graph that shows metal leaching levels of the copper-iron oxide catalysts of FIG. 12A. It is found that Cu takes an important role in IPA degradation. With respect to the most preferable Cu concentration, Cu may be 0.5mmol of C_{U}SO₄·5H₂O (Cu(0.5)-Fe₃O₄). It is found that metal leaching levels of Cu and Fe are within 0.12% and 0.36%, respectively.

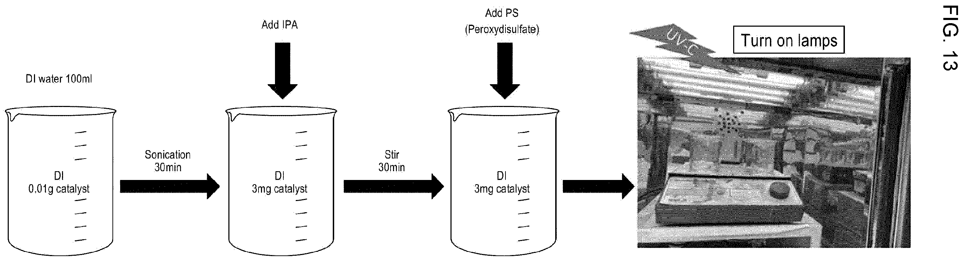

FIG. 13 is a flowchart that shows experiment procedures of a removal method of IPA by using a copper-iron oxide catalyst according to one embodiment of the present disclosure. In step S1, sonicated is a solution including a copper-oxide catalyst prepared according to the present disclosure(sonication). In step S2, to the sonicated solution in the step S1, added is an organic compound, followed by stirring. In step S3, an oxidant is added to the solution of the step S2. In step S4, an ultraviolet(UV) ray is irradiated to the prepared solution to remove IPA.

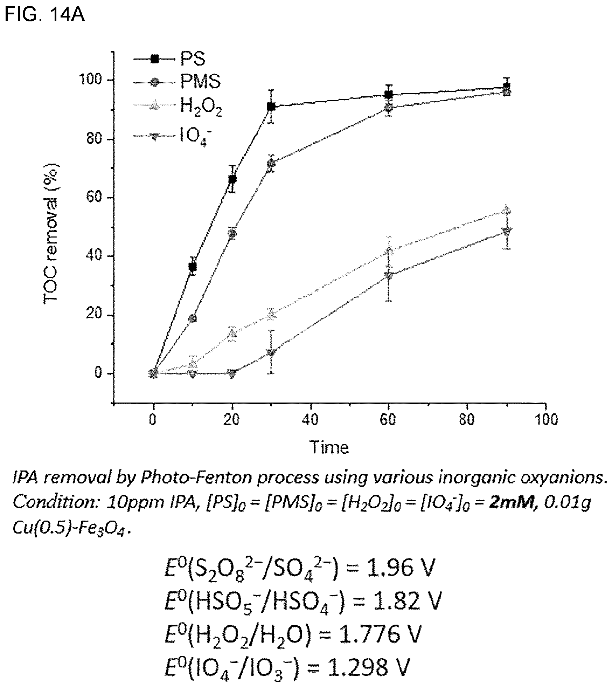

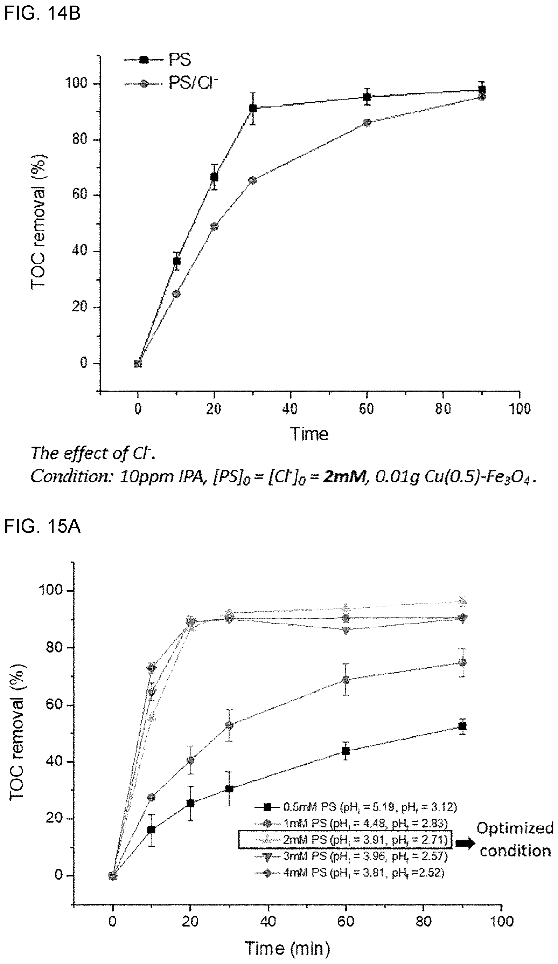

FIG. 14A is a graph that shows experiment results for effects on TOC removal rates depending on different types of oxidants used in FIG. 13, and FIG. 14B is a graph that shows experiment results for the effect of a chloride ion on TOC removal rates when using sodium persulfate(PS, Na₂S₂O₃) as an oxidant in FIG. 13. When using the PS as an oxidant, it is found that optical penton degradation of the IPA occurs well, and a degradation rate thereof slows down in the presence of a chloride ion(Cl⁻).

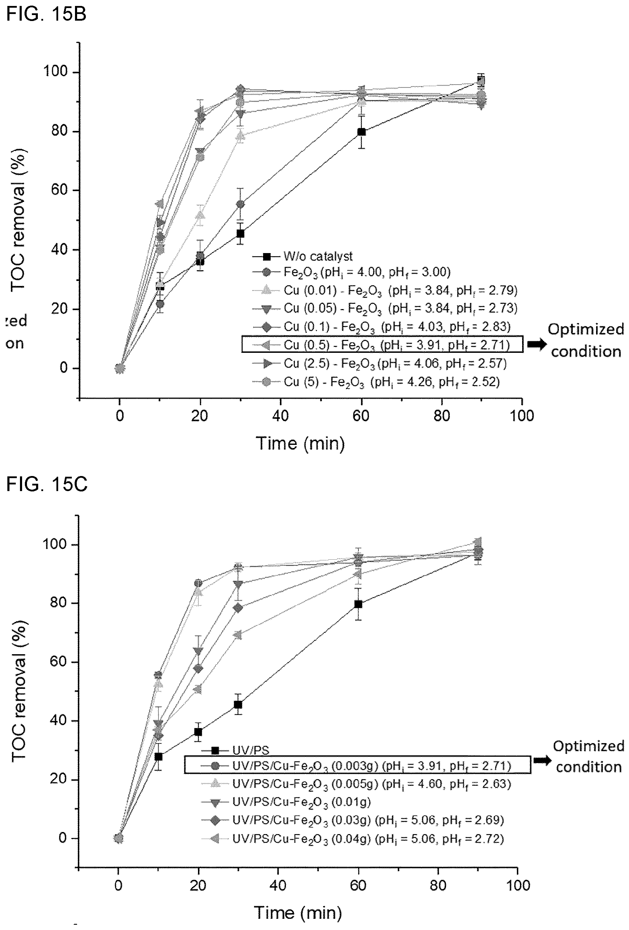

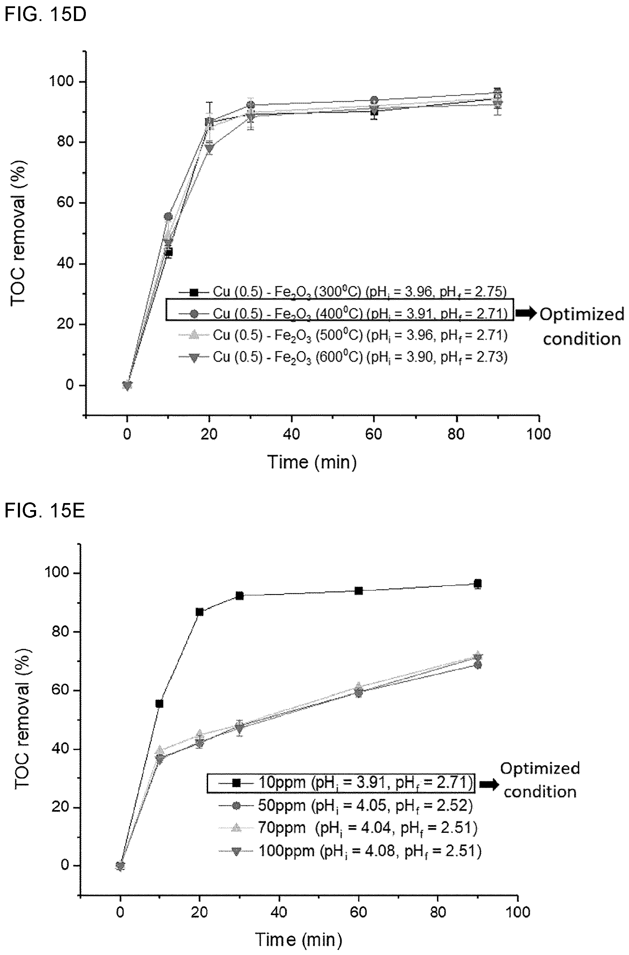

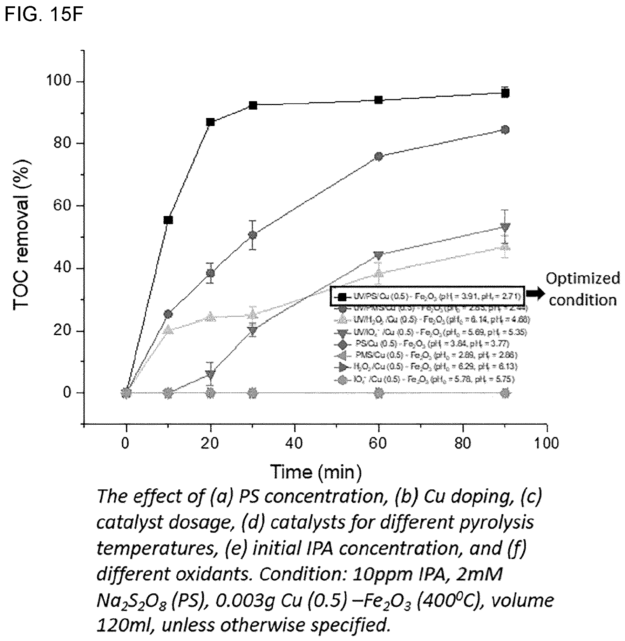

FIGS. 15A to 15F are graphs that show experiment results for effects on TOC removal rates depending on different conditions for each procedure in a removal method of IPA by copper-iron oxide catalysts according to one embodiment of the present disclosure.

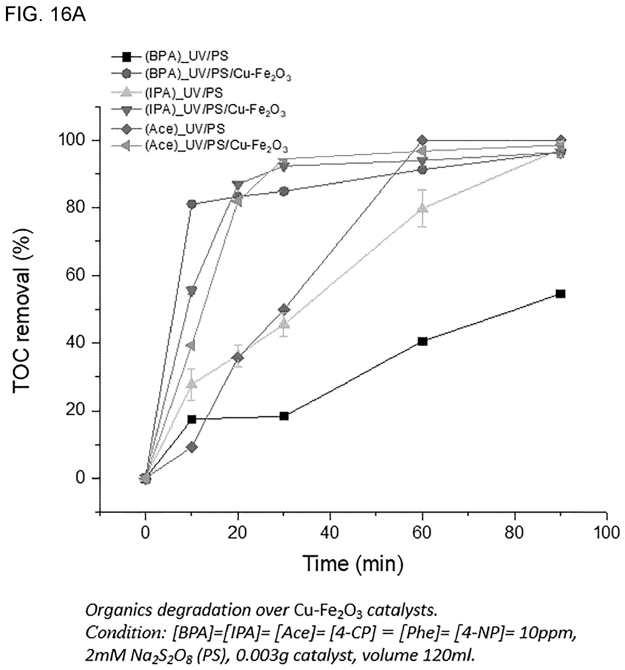

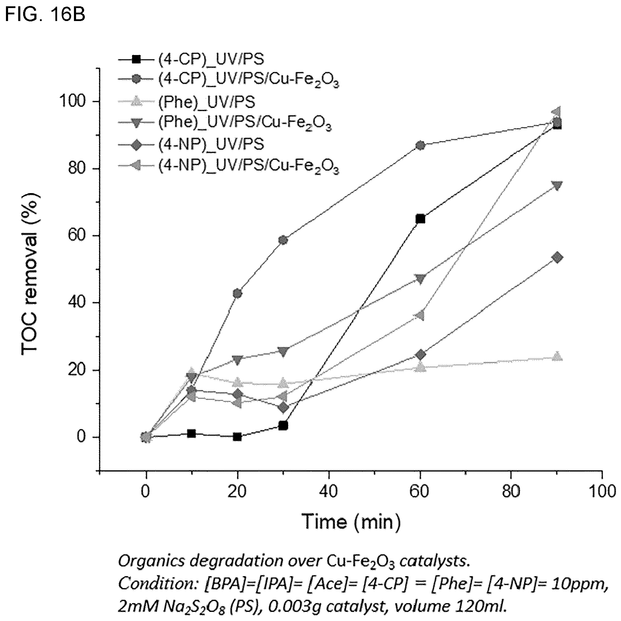

FIG. 16A is a graph that shows a comparison of degradation effects of copper-iron oxide catalysts according to one embodiment of the present disclosure on various kinds of organic matters(BPA, IPA, acetone). It is found that these BPA, IPA and acetone are completely degraded within 60 minutes by UV/PS/Cu-Fe₂O₃. FIG. 16B is a graph that shows a comparison of degradation effects of copper-iron oxide catalysts according to one embodiment of the present disclosure on various kinds of organic matters(4-CP, phenol, 4-NP). Reaction rates for degradation of these 4-CP, phenol and 4-NP increase in the presence of Cu-Fe₂O₃.

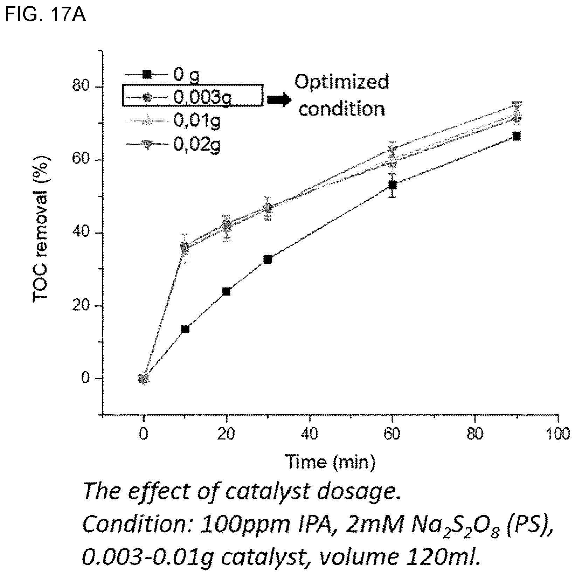

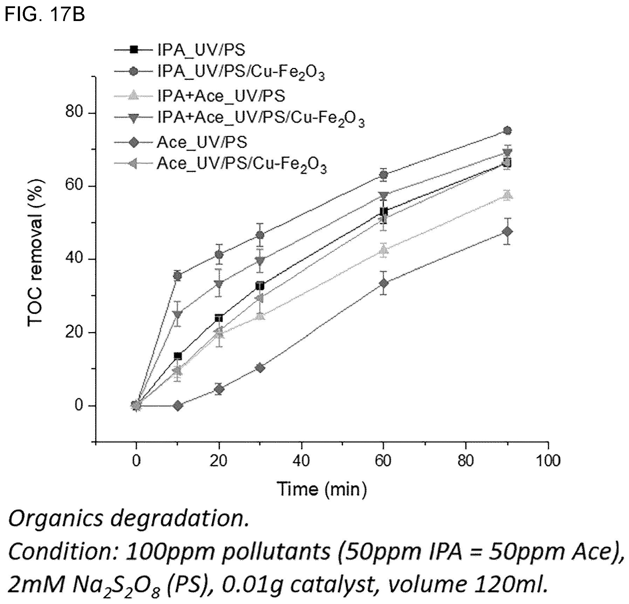

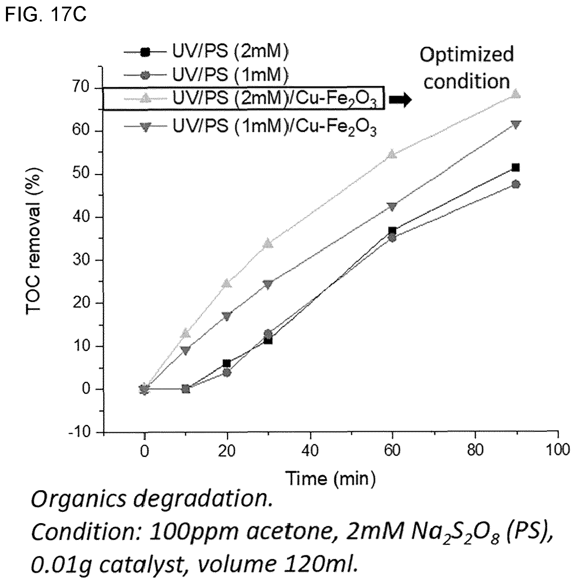

FIGS. 17A to 17C are graphs that shows experiment results of removal of IPA(100ppm) by copper-iron oxide catalysts according to one embodiment of the present disclosure. It is found that both of IPA(50ppm) and acetone(50ppm) are removed by UV/PS/Cu-Fe₂O₃.

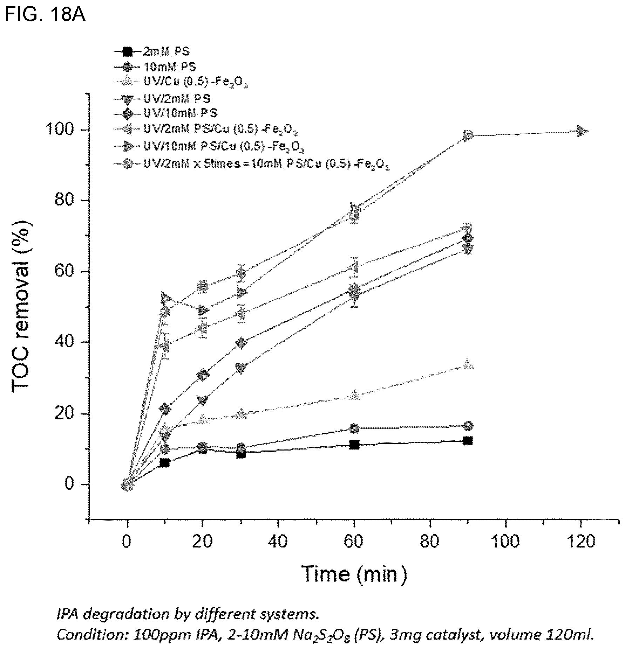

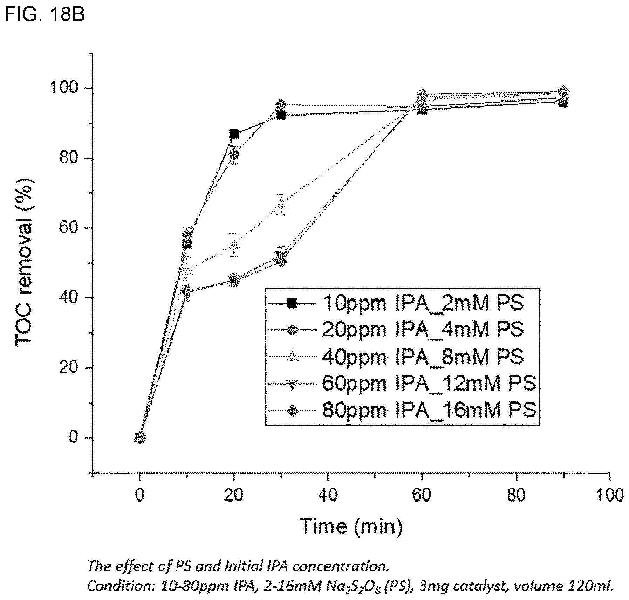

FIGS. 18A to 18B are graphs that shows experiment results for removal of IPA(100ppm) by copper-iron oxide catalysts according to one embodiment of the present disclosure. It is found that heterogeneous catalysts increase mineralization rates of the IPA(10-100ppm).

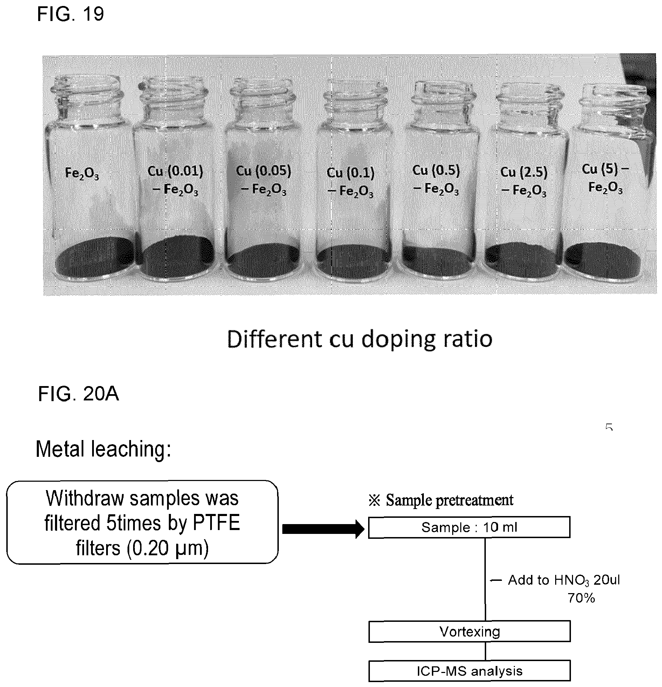

FIG. 19 is a comparative picture of copper-iron oxide catalysts prepared with different copper concentrations when preparing copper-iron oxide catalysts according to one embodiment of the present disclosure.

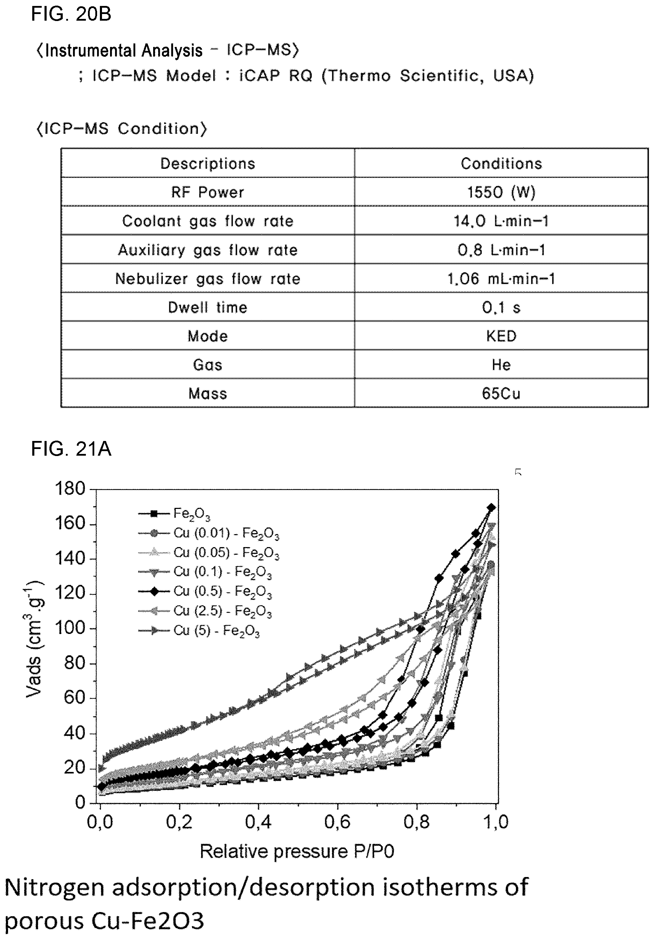

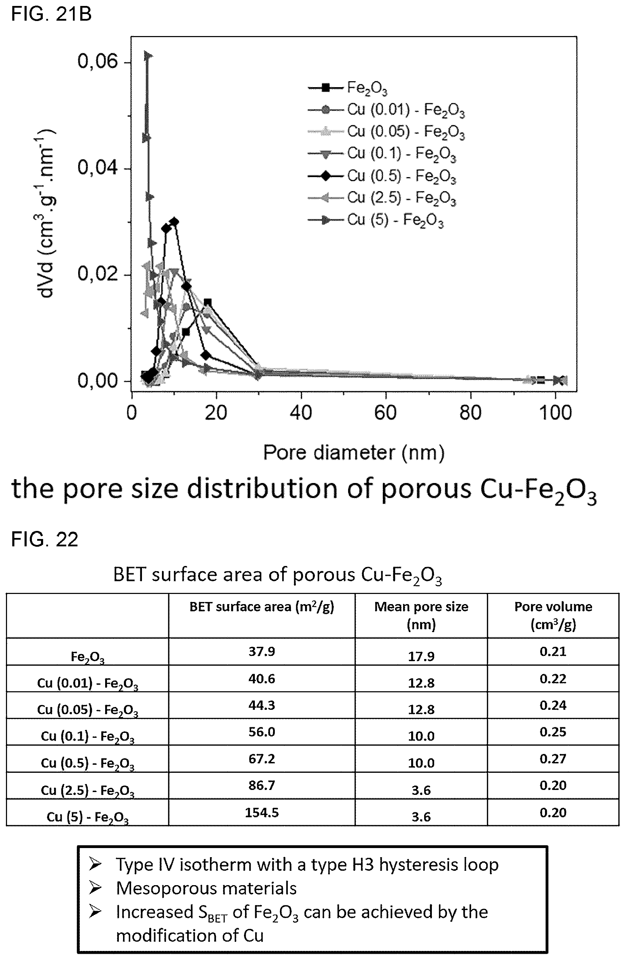

FIGS. 21A to 21B are graphs that show experiment results for specific surface areas of copper-iron oxide catalysts according to one embodiment of the present invention.

FIG. 22 is a table that shows an experiment result for specific surface areas, mean pore sizes and pore volumes depending on different copper concentrations of copper-iron oxide catalysts according to one embodiment of the present disclosure.

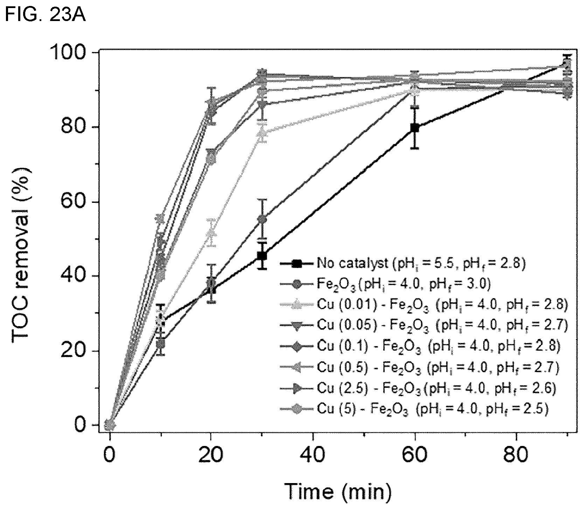

FIGS. 23A to 23B are graphs that show experiment results for total organic carbon(TOC) removal rates and metal leaching levels depending on different copper concentrations with respect to a preparation method of copper-iron oxide catalysts according to one embodiment of the present disclosure. It is found that a removal rate of Cu(0.5)-Fe₂O₃ for IPA is prominently higher than that of pure Fe₂O₃. The presence of Cu takes an important role in a UV/PS system for removal of the IPA.

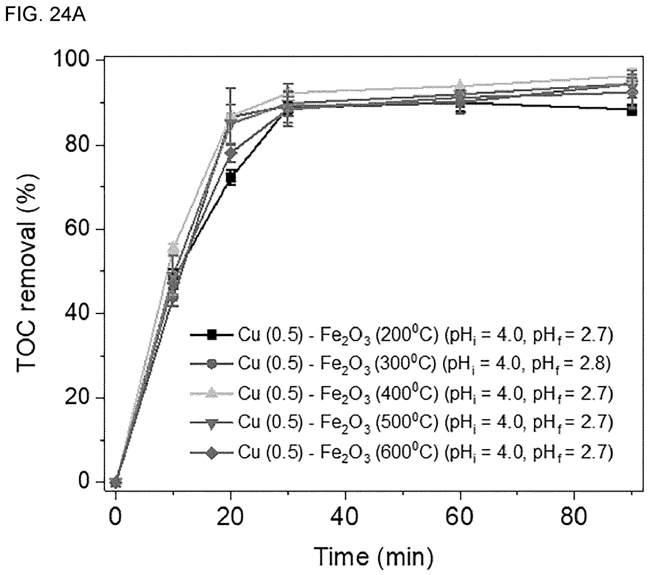

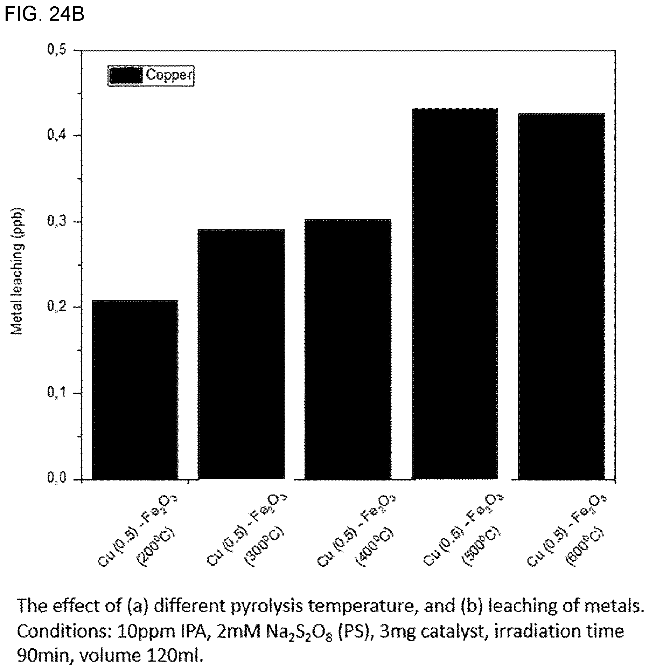

FIGS. 24A and 24B are graphs that show (a) copper(Cu) leaching levels and (b) experiment results for differences in degradation rates depending on different heat-treatment temperatures of copper-iron oxide catalysts according to one embodiment of the present disclosure. In FIG. 24A, with reference to TOC removal rates at 20 minutes, it is found that degradation rates of IPA slightly decrease at a temperature of 200°C to 600°C. In addition, when heat-treating the catalysts at a temperature of 300°C to 500°C, it is found that removal rates of the IPA are relatively high compared when heat-treating the same at the temperature of 200°C to 600°C. In FIG. 24B, as comparing the leaching amount of Cu, samples heat-treated at a temperature of 300°C to 400°C among those heat-treatment at a temperature of 300°C to 500°C have relatively the low leaching amount of metals and thus are determined suitable for use.

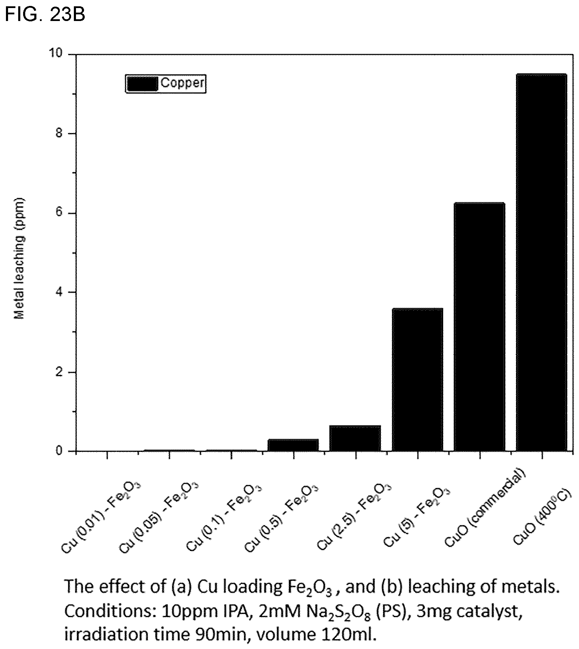

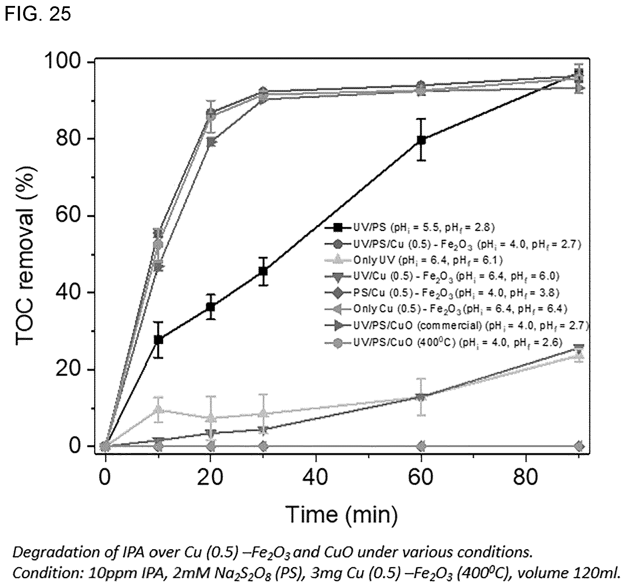

FIG. 25 is a graph that shows a comparison of IPA degradation rates of copper-iron oxide catalysts according to one embodiment of the present disclosure and heat-treated commercial copper oxide. When subjecting commercial copper oxide(CuO) to heat-treatment, it is found that this has IPA degradation performance similar to that of iron oxide added with copper(Cu(0.5) a little. However, as comparing the leaching amount of Cu in FIG. 23, it is found that samples in which commercial copper oxide is heat-treated (at 400°C) show the high leaching amount of metals and thus are not suitable for use as an IPA removal catalyst. On the other hands, the copper-iron oxide catalysts according to one embodiment of the present disclosure have a high IP removal efficiency with the low metal leaching amount. Thus, it is found that these catalysts have superior performances and high durability.

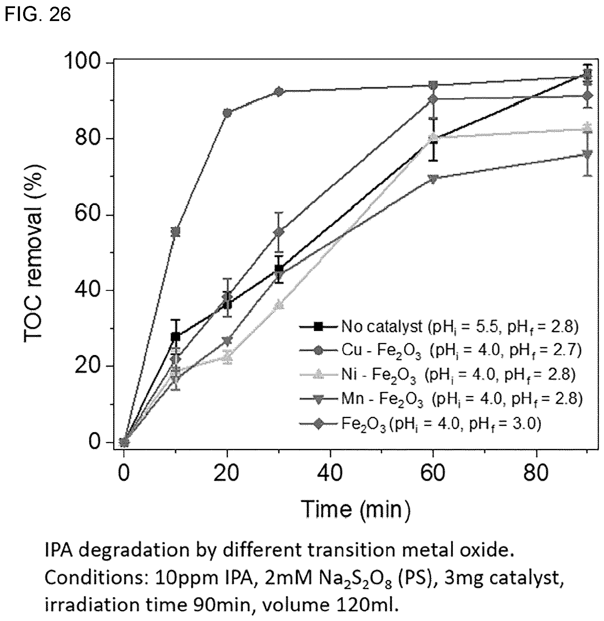

FIG. 26 is a graph that shows a comparison of IPA removal performances of Cu oxide, Cu-iron oxide, Mn-iron oxide and Ni-iron oxide. It is found that copper-iron oxide catalysts according to one embodiment of the present disclosure have the most superior IPA removal performance.

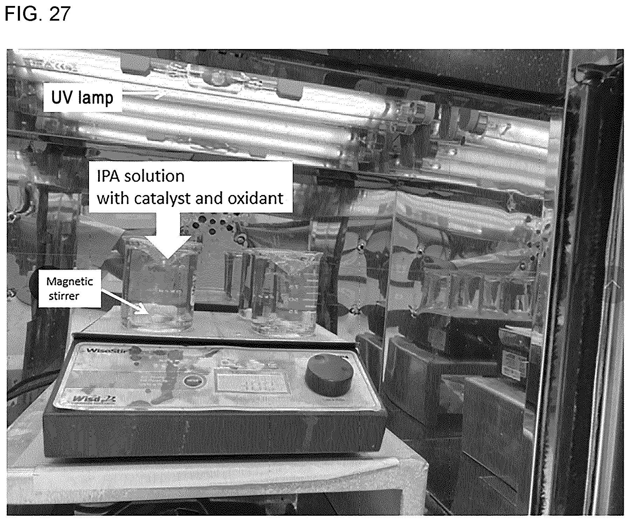

FIG. 27 is a picture of an experimental apparatus for IPA degradation by using copper-iron oxide according to one embodiment of the present disclosure.

### Examples

### Example 1: Analysis method used in the present disclosure

A crystalline structure was identified by X-ray diffraction under following conditions(XRD, a D8 Advance (Bruker) system with scan speed 2 theta/min: 0.5, and 2 theta range from 10° - 90° via monochromatic Cu Kα radiation).

A chemical state of an element at the surface of a sample were identified by X-ray photoelectron spectroscopy under following conditions(XPS, Nexsa (ThermoFisher Scientific, USA) system with (Al-Kα (1486.6 eV) source).

Morphology of a metal oxide catalyst was identified by field emission scanning electron microscope under following conditions(FE-SEM, FE-SEM(lnspect F50)): morphology of metal oxide catalysts.

A surface area was identified by Brunauer-Emmett-Teller(BET, BEL JaPan).

Identified were the amount of degradation of an organic compound(amount of mineralization) and the amount of an intermediate product by measuring TOC(TOC-L Shimadzu).

Concentrations of IPA and the intermediate product were identified by gas chromatography(2010 plus GS System with FID, Agilent Tech, USA) under following conditions(SH-Rtx-624 column (30m x 0.25mm × 1.4µm) with injection volume 4µL, inlet temperature 240°C and split. Oven temperatures were raised from 40°C (6°C / min) to 220°C (6°C / min) to 240°C).

Metal leaching was subjected to an experiment using an inductively coupled plasma-mass spectrometer(ICP-MS(iCAP RQ(Thermo Scientific, USA))).

FIG. 20A is a flowchart that shows experiment procedures of metal leaching, and FIG. 20B is a table that shows use conditions of inductively coupled plasma-mass spectrometry (ICP-MS).

### Example 2: Preparation method of a copper-iron oxide catalyst for degradation of an organic compound

A copper-iron oxide catalyst was prepared according to a preparation method of a copper-iron oxide catalyst for degradation of an organic compound as shown in FIG. 2A. In step S1, to a mixed solution of 15mmol of C₂H₂O₄·2H₂O and 25ml of DI slowly added was a mixed solution of an iron(Fe) precursor and a copper precursor in which iron(Fe) precursor of 29.5mmol of FeSO₄·7H₂O, 0.5mmol of CuSO₄·5H₂O and 25ml of DI are mixed together. Then, in step S2, precipitators were obtained by heating the solution prepared in the step S1 at 60°C for 30 minutes. In step S3, the precipitators obtained in the step S2 were filtered to afford metal oxalate. In step S4, the metal oxalate obtained in the step S3 was dried. In step S5, the dried metal oxalate was calcinated at 400°C to prepare the copper-iron oxide catalyst.

### Example 3: IPA removal by copper-iron oxide catalyst

An experiment on IPA removal was performed in respect to a removal method of IPA by using a copper-iron oxide catalyst as shown in FIG. 13. In step S1, sonicated was a solution including 0.01g of a cupper-oxide catalyst prepared according to one embodiment of the present disclosure and 100mL of DI water for 30 minutes. In step S2, to the sonicated solution, added was a solution of 10ppm of IPA(isopropyl alcohol, followed by stirring at 30 minutes. In step S3, to the solution of S2, added were DI water, 3mg of a cupper-iron oxide catalyst and 2mM of an oxidant, PS(Na₂S₂O₈). In step S4, an ultraviolet(UV) ray was irradiated to the solution prepared in the step S3 to perform the IPA removal. The overall reaction time is 90 minutes.

## Claims

1. A copper-iron oxide(Cu-Fe₂O₃) catalyst composition, wherein the composition is prepared by following steps of:
adding a mixed solution of an iron(Fe) precursor and a copper(Cu) precursor to a precipitator solution(S1);
obtaining precipitates by heating a solution prepared in the step S1 (S2);
obtaining metal oxalate by filtering the precipitates obtained in the step S2 (S3);
drying the metal oxalate obtained in the step S3 (S4); and
obtaining a copper-iron oxide catalyst by calcinating the metal oxalate subjected to the step S4 (S5).

2. The copper-iron oxide catalyst composition of claim 1, wherein the precipitator solution is a solution of oxalic acid dehydrate(C₂H₂O₄·2H₂O).

3. The copper-iron oxide catalyst composition of claim 1, wherein a molar ratio of an iron ion(Fe₂⁺) to a copper ion(Cu₂⁺)(Fe₂⁺: Cu₂⁺) in the mixed solution of the iron(Fe) precursor and the copper(Cu) precursor of the step S1 is 100 : 1.69 to 20.

4. The copper-iron oxide catalyst composition of claim 1, wherein a calcination temperature in the step S5 in which the metal oxalate is calcinated ranges from 300°C or more and 400°C or less.

5. The copper-iron oxide catalyst composition of claim 1, wherein the mixed solution of the iron(Fe) precursor and the copper(Cu) precursor is a mixed solution of iron(II) sulfate heptahydrate(FeSO₄.7H₂O) and copper sulfate pentahydrate(CuSO₄·5H₂O).

6. A preparation method of a copper-iron oxide catalyst composition, wherein the method comprises the following steps of:
adding a mixed solution of an iron(Fe) precursor and a copper(Cu) precursor to a precipitator solution(S1);
obtaining precipitates by heating a solution prepared in the step S1 (S2);
obtaining metal oxalate by filtering the precipitates obtained in the step S2 (S3);
drying the metal oxalate obtained in the step S3 (S4); and
obtaining a copper-iron oxide catalyst by calcinating the metal oxalate subjected to the step S4 (S5).

7. The preparation method of a copper-iron oxide catalyst composition of claim 6, wherein the precipitator solution is a solution of oxalic acid dehydrate(C₂H₂O₄·2H₂O).

8. The preparation method of a copper-iron oxide catalyst composition of claim 6, wherein a molar ratio of an iron ion(Fe₂⁺) to a copper ion(Cu₂⁺)(Fe₂⁺: Cu₂⁺) in the mixed solution of the iron(Fe) precursor and the copper(Cu) precursor of the step S1 is 100 : 1.69 to 20.

9. The preparation method of a copper-iron oxide catalyst composition of claim 6, wherein the mixed solution of the iron(Fe) precursor and the copper(Cu) precursor is a mixed solution of an iron(II) sulfate heptahydrate(FeSO₄·7H₂O) and copper sulfate pentahydrate(CuSO₄·5H₂O).

10. A method of degradation of an organic compound using a copper-iron oxide catalyst, wherein the method comprises following steps of:
sonicating a solution including a copper-iron oxide catalyst composition prepared according to claim 1(S1);
adding an organic compound to the sonicated solution in the step S1, followed by stirring (S2);
adding an oxidant to the solution of the step S2 (S3); and
irradiating an ultraviolet(UV) ray to the solution prepared in the step S3 (S4).

11. The method of degradation of an organic compound using a copper-iron oxide catalyst of claim 10, wherein the oxidant is sodium persulfate(PS).

12. The method of degradation of an organic compound using a copper-iron oxide catalyst of claim 10, wherein the organic compound is at least anyone selected from a group consisting of isopropyl alcohol(IPA), bisphenol-A(BPA), acetone, 4-chlorophenol(CP), phenol and 4-noylphenol(4-NP).
